# EUROPÄISCHE PATENTSCHRIFT

(11) **EP 2 314 185 B1**
(45) Veröffentlichungstag und Bekanntmachung des Hinweises auf die Patenterteilung: **16.01.2013**
(21) Anmeldenummer: 10012053.4
(22) Anmeldetag: 30.09.2010
(51) Int. Cl.: A47J 31/40

(54) **Instantpulverfördervorrichtung eines Getränkezubereitungsgerät**
Instant powder conveying device for a drink preparation device
Dispositif de transport de poudre instantanée d'un appareil de préparation de boissons

(30) Priorität: 21.10.2009 DE 202009014265 U
(43) Veröffentlichungstag der Anmeldung: 27.04.2011
(73) Patentinhaber: Eugster/Frismag AG, 8580 Amriswil (CH)
(72) Erfinder: Pano, Giovanni, 9323 Steinach (CH); Henke, Jörg, 8280 Kreuzlingen (CH)
(74) Vertreter: Schubert, Siegmar

(56) Entgegenhaltungen:
- DE-A1- 2 239 185
- FR-A- 694 878
- US-A- 3 411 675

## Beschreibung

Die Erfindung betrifft eine Instantpulverfördervorrichtung eines Getränkezubereitungsgeräts nach dem Oberbegriff des Anspruchs 1.

In bekannten Getränkezubereitungsgeräten wird jeweils in einem Instantpulverbehälter Instantpulver bevorratet, welches mittels einer Fördervorrichtung einer Brüh- bzw. Misch- oder Zubereitungsanordnung zugeführt wird. Die Fördervorrichtung besteht insbesondere aus einer in einem unteren Bereich des Instantpulverbehälters angeordneten Förderschnecke oder Draht-Förderspindel, die geeignet ist, kleinere Menge Instantpulver genau zu dosieren. Da die Rieselfähigkeit des Instantpulvers in dem Instantpulverbehälter insbesondere durch Dampf oder Luftfeuchtigkeit beeinträchtigt sein kann, was zu einer sogenannten Brückenbildung des Instantpulvers führt, bei der das Instantpulver nicht mehr ohne weiteres rieselfähig ist, kann auch die Förderfunktion der Draht-Förderspindel oder Förderschnecke herabgesetzt oder unterbrochen sein. Insbesondere kann die Draht-Förderspindel oder Förderschnecke in dem Pulvervorrat einen, etwa ihrem Durchmesser entsprechenden, Tunnel ausreiben, wonach keine Förderung mehr erfolgt. Dies gilt insbesondere bei dampferzeugenden Getränkezubereitungsgeräten, bei denen der Dampf an einem Ende der Draht-Förderspindel oder Förderschnecke durch eine Auslauföffnung für das Instantpulver in den Instantpulverbehälter gelangen kann. Um die Förderwirkung der Draht-Förderspindel oder Förderschnecke möglichst nicht zu beeinträchtigen, sind bereits Mittel zum Auflockern des Instantpulvers in dem Instantpulverbehälter bekannt.

So werden in der Nahrungsmittelindustrie, in der feines Pulver aus einem meist konischen oder trapezförmiger Behälter durch einen in dessen unteren Bereich horizontal angeordneten Schneckenförderer gefördert bzw. dosiert wird, Rührwerke und/oder Vibratoren oder auch Paddel, Schlagbolzen, Luftkissen, Gleitbeschichtungen vollständig oberhalb des Schneckenförderers eingesetzt, um das Pulver bis zu einem Einlauf des Schneckenförderers zu bringen (EP-A 1 916 207). Diese Maßnahmen erfordern jedoch einen erheblichen technischen Aufwand insbesondere durch die Antriebe der Rührwerke, Vibratoren, Paddel, Schlagbolzen und/oder sind nicht ausreichend wirksam, so dass sie für Haushaltszubereitungsgeräte oder halbprofessionelle Anwendungen kaum in Betracht zu ziehen sind.

In Instantpulverbehältern, aus denen das Instantpulver horizontal gefördert wird, soll das Instantpulver in der Regel gleichmäßig verteilt bevorratet sein, das heißt, den Instantvorratsbehälter überall ungefähr gleichmäßige hoch füllen. Durch den horizontalen Fördervorgang mittels der in einem Bodenbereich eines Instantpulverbehalters horizontal angeordneten drehbaren Draht-Förderspindel oder einer entsprechenden Förderschnecke, an deren Ende sich eine Auslauföffnung befindet, staut sich jedoch das Instantpulver an diesem Ende auf Somit kann eine gleichmäßige Verteilung des Instantpulvers in dem Instantpulverbehälter bei bestimmungsgemäßer Funktion der drehenden Draht-Förderspindel oder Förderschnecke gestört sein. Durch die erzwungene Anhäufung des Instantpulvers in einem Bereich des Instantpulverbehälters kann ein Deckel auf dem Instantpulverbehälter unerwünscht angehoben werden.

Zum Stand der Technik gehört bereits eine Pulverfördervorrichtung, um pulverförmiges oder granulatförmiges Material in ein Medium oder einen Behälter mit einem vorbestimmten Volumenstrom zu fördern (US 3 411 675 A). Hierzu weist die Pulverfördervorrichtung in einem Bodenbereich des Pulverbehälters eine im Wesentlichen horizontal angeordnete drehbare Förderschnecke auf, an deren Ende sich eine Auslauföffnung eines Rohrs befindet. In dem Pulverbehälter ist oberhalb der Förderschnecke eine Hilfsschnecke angeordnet, die entgegengesetzt zu der Förderschnecke fördert und deren Rückförderstrecke nahe dem Ende der Förderschnecke beginnt und kürzer als diese ist. Die Hilfsförderschnecke soll einen gleichmäßigen Volumenstrom an einer Eingangsöffnung des Rohrs bewirken, in dem ein Ende der Förderschnecke angeordnet ist.

Aus der DE 22 39 185 A1 ist eine Vorrichtung zur Abgabe pulvriger oder körniger Stoffe bekannt, die eine in einem wannenförmigen Trichter entlang dem Boden verlaufende erste Förderschnecke und eine in dem Trichter oberhalb der ersten Förderschnecke dienende zweite Förderschnecke angeordnet, die in entgegengesetzter Richtung zu einer Abgabeöffnung fördert. Die zweite Förderschnecke beginnt nahe dem Ende der ersten Förderschnecke und erstreckt sich über deren Förderstrecke.

Der vorliegenden Erfindung liegt primär die Aufgabe zugrunde, eine möglichst gleichmäßige Verteilung des Instantpulvers in dem Instantpulverbehälter bei bestimmungsgemäßer Förderfunktion einer drehbaren, horizontal angeordneten Draht-Förderspindel oder Förderschnecke an deren Ende eine Auslauföffnung angeordnet ist, zu gewährleisten.

Diese Aufgabe wird durch eine Ausbildung der Instantpulverfördervorrichtung mit den in Anspruch 1 angegebenen Merkmalen gelöst.

Hierzu wird ausgegangen von einer Instantpulverfördervorrichtung mit mindestens einer oberhalb einer Draht-Förderspindel oder Förderschnecke, mit der Instantpulver in normaler Förderrichtung über einer Förderstrecke zu der Auslauföffnung hin transportiert wird, angeordneten Rückförderschnecke, die zu der Draht-Förderspindel oder Förderschnecke gegenläufig ist und deren Rückförderstrecke nahe dem Ende der Draht-Förderspindel oder Förderschnecke beginnt. Mit der Rückförderschnecke wird Instantpulver bei entstehender Anhäufung im Bereich oberhalb der Auslauföffnung wirksam zurück in das Innere des Instantpulverbehälters gefördert, so dass das Instantpulver über die Länge der Förderspindel oder Förderschnecke wenigstens annähernd gleichmäßig verteilt wird und sich an dem Auslauföffnungsseitigen Ende der Förderstrecke nicht signifikant anhäuft. Damit wird vermieden, dass ein Deckel des Instantpulverbehälters angehoben wird. Der wirksame rückfördernde Abschnitt der Rückförderschnecke und damit die Rückförderstrecke kann einfach kürzer als die Förderstrecke der Förderspindel oder Förderschnecke bemessen sein.

Erfindungsgemäß sind gemäß Anspruch 1 je nach Art und Eigenschaften des Instantpulvers auf einer angetriebenen Rückförderwelle mindestens zwei Rückförderschnecken austauschbar in axialem Abstand zueinander aufgeschoben, um eine angenähert gleichmäßige Verteilung des Instantpulvers bei unterschiedlichen Instantpulvereigenschaften zu erzielen. Die Rückförderstrecke erstreckt sich in diesem Fall über die mindestens zwei Rückförderschnecken.

Der in diesem Anmeldetext verwendete Begriff Förderschnecke soll auch ähnliche unkomplizierte, um eine horizontale Drehachse rotierende und im wesentlichen horizontal fördernde Förderelemente wie Förderspindeln abdecken.

Gemäß Anspruch 2 ist die mindestens eine Rückförderschnecke mit geringerer Förderleistung als die Förderleistung der Draht-Förderspindel oder Förderschnecke bemessen. Vorteilhaft reicht die geringere Förderleistung der Rückförderschnecke aus, da ein Teil der von der Draht-Förderspindel oder Förderschnecke zu der Auslauföffnung geförderten Instantpulvermenge bestimmungsgemäß durch die Auslauföffnung ausläuft.

Den technischen Aufwand herabsetzend ist weiterhin die Anordnung gemäß Anspruch 3, wonach die Rückförderschnecke und die Draht-Förderspindel oder Förderschnecke getriebetechnisch mit einem gemeinsamen Motor, vorzugsweise einem elektrischen Getriebemotor verbunden sind.

Um das Instantpulver in dem Bereich neben der Rückförderstrecke mit nur wenigen unkomplizierten Teilen und insbesondere ohne separaten Antrieb für eine störungsfreie Förderung mit der Draht-Förderspindel oder Förderschnecke aufzulockern, ist gemäß Anspruch 4 mindestens ein Schlagelement, welches in axialer Richtung der Draht-Förderspindel oder Förderschnecke elastisch verstellbar und in die Draht-Förderspindel oder Förderschnecke im wesentlichen quer zu dieser hineinreichend angeordnet ist, gegenüber der Rückförderstrecke der Rückförderschnecke axial versetzt in dem Instantpulverbehälter angeordnet.

Das mindestens eine Schlagelement erfordert keinen separaten Antrieb Es wird durch die Draht-Förderspindel oder Förderschnecke selbst angetrieben und zwar über einen Verstellweg, an dessen Ende das Schlagelement aus der Draht-Förderspindel oder Förderschnecke herausspringt und infolge der elastischen Verstellbarkeit zurückschnellt, dabei das Instantpulver so bewegt bzw. durch Stoß unmittelbar oder mittelbar löst, dass das Instantpulver in die im wesentlichen horizontal angeordnete Draht-Förderspindel oder Förderschnecke gelangt und mittels dieser horizontal gefördert wird. Im Einzelnen kann durch die elastische Rückstellung des Schlagelements, wenn dieses nicht unmittelbar an verfestigtes Instantpulver anstößt, das Schlagelement an eine Flanke der Draht-Förderspindel oder Förderschnecke anschlagen, die der Flanke folgt, aus dem es herausgeglitten ist. Bei Anschlag des Schlagelements auf die Draht-Förderspindel oder Förderschnecke kann der Stoß mittelbar über die Draht-Förderspindel oder Förderschnecke auf das sie umgebende Instantpulver übertragen werden und eine Brückenbildung des Instantpulvers verhindern.

Zum Beispiel sind das Schlagelement und die Draht-Förderspindel oder die Förderschnecke so angeordnet bzw. bemessen, dass das Schlagelement jeweils nach einer Umdrehung der Draht-Förderspindel oder Förderschnecke aus dieser heraus gleitet und an deren nächste Flanke springt.

Dieser Sprung kann statt dessen je nach Anordnung und Bemessung der oben genannten Teile auch bei jeweils nur einer Teilumdrehung erfolgen, was einen relativ geringen, gleichmäßigeren Verschleiß ermöglichen kann.

Die Wirkung des elastisch verstellbaren Schlagelements ist um so größer, je größer die Steigung bzw. der Gang der Draht-Förderspindel oder Förderschnecke ist.

Gemäß Anspruch 6 ist das Schlagelement außerhalb der Draht-Förderspindel oder Förderschnecke bevorzugt oberhalb der Draht-Förderspindel oder Förderschnecke an einem ortsfesten Schlagelementträger als Aufhängung angebracht, wobei eine Rückstellfeder einerseits mit dem Schlagelementträger und andererseits mit dem Schlagelement verbunden ist. Die Aufhängung kann aber auch an einem Instantpulverbehälterdeckel erfolgen. In beiden Fällen ist die Anordnung unkompliziert und gewährleistet eine zuverlässige Funktion des Schlagelements.

Kompakt ist der Schlagelementträger nach Anspruch 6 hülsenförmig ausgebildet, wobei er einen Abschnitt der Rückförderschneckenwelle aufnimmt. An diesem Abschnitt kann die Rückförderschnecke gelagert sein und zur Übertragung der Drehbewegung über ein Getriebe mit dem Motor, die außerhalb des Instantpulverbehälters angeordnet sein können, verbunden sein.

Besonders einfach ist gemäß Anspruch 7 das Schlagelement über eine Blattfeder als Rückstellfeder mit dem Schlagelementträger verbunden. Die Blattfeder dient somit zur Anbringung des Schlagelements an der Aufhängung und zur elastischen Verstellbarkeit des Schlagelements.

Bevorzugt weist das Schlagelement nach Anspruch 8 eine im wesentlichen quer zu der axialen Richtung der Draht-Förderspindel oder Förderschnecke angeordnete Schlagfläche auf Die Schlagfläche vergrößert den Einwirkungsbereich des Schlagelements auf das Instantpulver. Weiterhin kann die Schlagfläche des Schlagelements zur Verschleißminderung nach Anspruch 9 um den Steigungswinkel der Draht-Förderspindel oder Förderschnecke gegen deren Normal-Querschnittsfläche, die rechtwinklig zu der Achse der Draht-Förderspindel oder Förderschnecke gedacht ist, geneigt sein.

Weiterhin bevorzugt ist die Schlagfläche des Schlagelements gemäß Anspruch 10 an den Querschnitt des Bodenbereichs des Instantpulverbehälters angepasst, jedoch durch den Bodenbereich ungehindert beweglich, um großflächig auf das Instantpulver einzuwirken.

Um über eine größere axiale Erstreckung der Draht-Förderspindel oder Förderschnecke zum Lockern des Instantpulvers wirksam zu sein, sind gemäß Anspruch 11 mehrere Schlagelemente in axialer Richtung der Draht-Förderspindel oder Förderschnecke versetzt angeordnet.

Zwei Ausführungsbeispiele einer Instantpulverfördervorrichtung werden im Folgenden anhand einer Zeichnung mit sieben Figuren beschrieben, in der eine Draht-Förderspindel vereinfacht dargestellt ist und aus der sich weitere vorteilhafte Einzelheiten ergeben können. Es zeigt:
- Fig.1: eine Instantpulverfördervorrichtung eines Getränkezuberertungsgeräts in einem Längsschnitt mit einer Draht-Förderspindel und einer zu dieser gegenläufigen Rückförderschnecke,
- Fig.2: einen Querschnitt durch die Instantpulverfördervorrichtung gemäß Figur 1 in der Schnittebene B-B,
- Fig.3: einen Querschnitt durch die Instantpulverförderrorrichtung gemäß Figur 1 in der Schnittebene C-C,
- Fig.4: eine Instantpulverfördervorrichtung eines Getränkezubereitungsgeräts in einem Längsschnitt gemäß Figur 1, jedoch zusätzlich mit zwei Schlagelementen, in einer ersten Position der Schlagelemente,
- Fig.5: eine Instantpulverfördervorrichtung gemäß Figur 4, jedoch in einer zweiten Position der Schlagelemente,
- Fig.6: einen Querschnitt durch die Instantpulverfördervorrichtung gemäß Figur 4 in der Schnittebene C-C und
- Fig.7: einen Querschnitt durch die Instantpulverfördervorrichtung gemäß Figur 4 in der Schnittebene D-D.

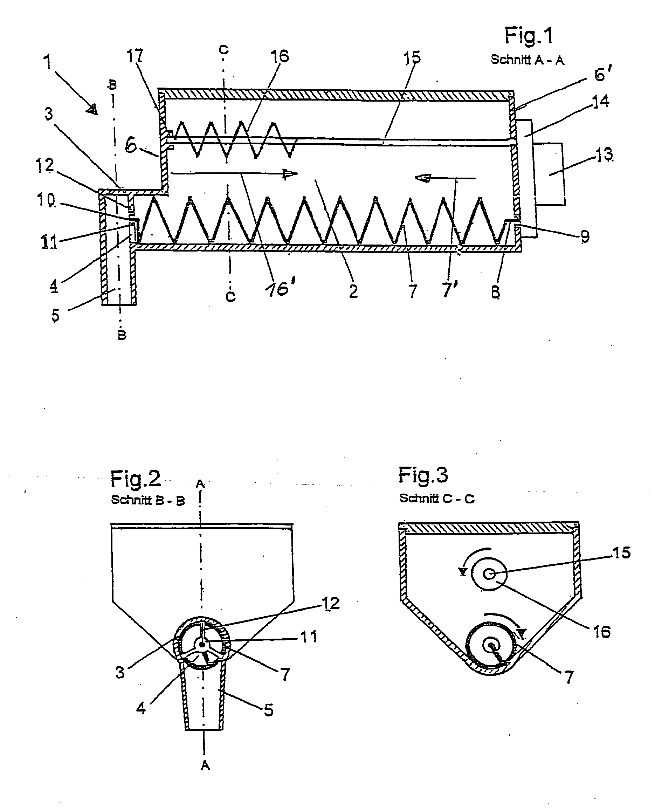

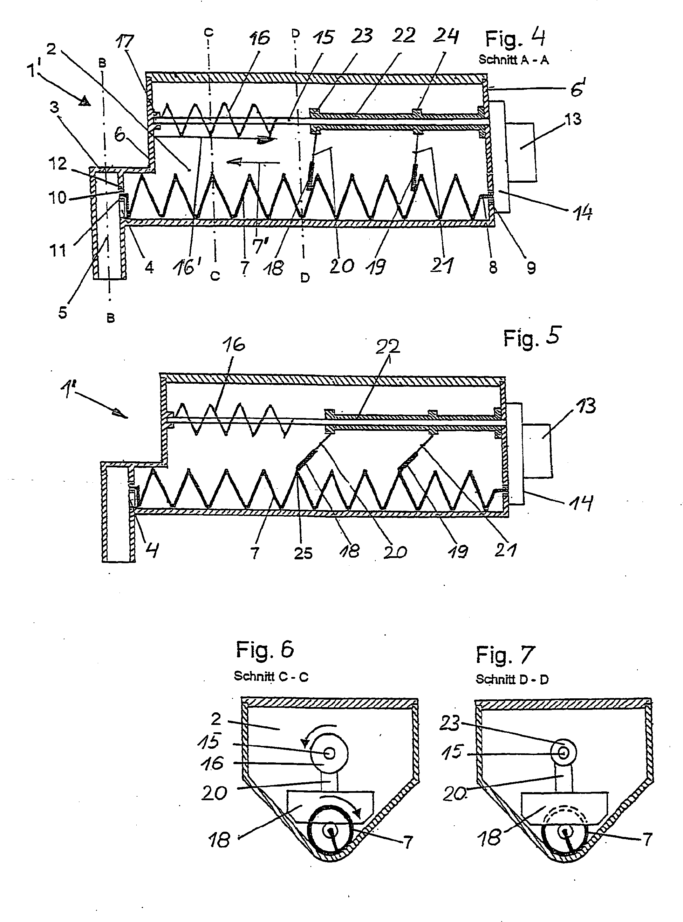

Der Querschnitt durch die Instantpulverfördervorrichtung gemäß Figur 4 in der Schnittebene B-B entspricht der Figur 2.

In sämtlichen Figuren sind übereinstimmende Teile mit gleichen Bezugszeichen versehen.

In den Figuren 1, 4 und 5 ist eine Instantpulverfördervorrichtung allgemein mit 1 bezeichnet, die einen Instantpulverbehälter 2 zur Bevorratung von Instantpulver aufweist. An dem nicht bezeichneten rinnenförmigen Bodenbereich des Instantpulverbehälters mündet dieser in einen Auslaufzylinder 3, und zwar an einer Stirnwand 6 des Instantpulverbehälters 2, der eine Rückwand 6' gegenüber liegt. Über eine Auslauföffnung 4 steht der Auslaufzylinder mit einer senkrecht angeordneten Auslaufschnaupe 5 in Verbindung, die zu einer nicht dargestellten Brüh- bzw. Misch- oder Zubereitungsanordnung führt.

In den Auslaufzylinder 3 ragt ein Ende einer, wie in Figur 1 dargestellt, in dem Bodenbereich des Instantpulverbehälters horizontal angeordneten Draht-Förderspindel 7, deren Förderspindelantriebszapfen 8 an einem Ende in einem Förderspindelachslager 9 gelagert ist. Der Förderspindelantriebszapfen 8 ist über ein Getriebe 14 getriebetechnisch mit einem Elektromotor 13 verbunden.

An ihrem Auslaufzylinder seitigen Ende ist die Draht-Förderspindel 7 mittels eines vorderen Förderspindellagerzapfens 10 in einem vorderen Förderspindelzapfenlager 11 drehbar gelagert. Eine im einzelnen aus Figur 2 ersichtliche Förderspindelzapfenlageranbindung ist mit 12 bezeichnet.

Die Förderrichtung der Draht-Förderspindel 7 verläuft in den vorliegenden beiden Ausführungsbeispielen in den Figuren 1 bzw. 4 und 5 der Zeichnung von rechts nach links zu der Auslauföffnung 4, wie in Fig. 1 mit dem Pfeil 7' angedeutet.

In dem Instantpulverbehälter 2 ist weiterhin oberhalb der Draht-Förderspindel 7 eine Rückförderschnecke 16 in vertikalem Abstand parallel zu der Draht-Förderspindel 7 horizontal angeordnet. Eine Rückförderschneckenwelle 15, auf die die Rückförderschnecke 16 aufgeschoben ist, ist an einem vorderen Rückförderschneckenwellenlager 17 drehbar gelagert. An dem dem Rückförderschneckenwellenlager 17 gegenüberliegenden Ende der Rückförderschneckenwelle 15 ist diese in einer Rückwand 6' des Gehäuses 2 und/oder in dem außen an der Rückwand angebrachten Getriebe 14 gelagert und über dieses mit dem Motor 13, der als Elektromotor ausgebildet ist, getriebetechnisch verbunden.

Das Getriebe 14 ist so ausgelegt, dass die Draht-Förderspindel 7 und die Rückförderschneckenwelle 15 mit der Rückförderschnecke 16 zueinander im entgegengesetzten Drehsinn angetrieben werden, wenn der Motor 13 eingeschaltet ist. Die zueinander entgegengesetzten Drehrichtungen der Draht-Förderspindel 7 und der Rückförderschnecke 16 sind bei gleichsinnigen Gängen der Förderspindel 7 und der Rückförderschnecke 16 vorzusehen.

Wie insbesondere aus Figur 1 ersichtlich, ist eine Rückförderstrecke 16', über die sich die Rückförderschnecke 16 erstreckt, kürzer als die nicht bezeichnete Förderstrecke der Draht-Förderspindel 7, die sich von dem Förderspindelantriebszapfen 8 bis zu der Auslauföffnung 4 erstreckt.

Da die Rückförderschnecke nur einen Teil des mittels der Draht-Förderspindel 7 zu der Auslauföffnung 4 geförderten Instantpulvers zurück in einen zentralen Bereich des Instantpulverbehälters 2 zu transportieren braucht, ist die Förderleistung der Rückförderschnecke 16 kleiner als diejenige der Draht-Förderspindel 7. Dementsprechend wird der Motor 13 nur in geringem Maße zusätzlich durch die Rückförderschnecke 16 belastet.

Gleichwohl wird durch die Rückförderschnecke 16 gewährleistet, dass sich gegebenenfalls zuviel in Förderrichtung 7' gefördertes Instantpulver nicht an dem Auslauföffnung seitigen Ende der Draht-Förderspindel 7' bzw. der Stirnwand 6 innen in dem Gehäuse 2 anstaut.

Die Drahtförderspindel, die Rückförderschnecke und die Rückförderschneckenwelle bestehen bevorzugt aus Metall und sind elektrisch leitfähig gelagert, um eine elektrostatische Aufladung des Instantpulvers und ein dadurch verursachtes Instantpulververhalten zu vermeiden

In der zweiten Ausführungsform der Instantpulverfördervorrichtung 1' sind, wie aus den Figuren 4 bis 7 ersichtlich, zwei Schlagelemente 18 und 19, in die Draht-Förderspindel 7 eingreifend, in axialer Richtung der Draht-Förderspindel 7 bzw. in Förderrichtung 7' versetzt, im wesentlichen über dieser angeordnet, und zwar im Anschluss an die Rückförderstrecke 16'. Die axiale Richtung der Draht-Förderspindel 7 ist die Richtung deren fiktiver Mittelachse bzw. Drehachse. Die Schlagelemente 18 und 19 sind jeweils, wie aus Figur 4 für das Schlagelement 18 ersichtlich, an den Bodenbereich des Instantpulverbehälters 2 angepasst und dort durch den Bodenbereich ungehindert beweglich.

Die beiden Schlagelemente 18 und 19 sind über je eine Blattfeder 20 bzw.21 als Rückstellfeder mittels je einer Rückstellfederanbindung 23 bzw. 24 mit einem hülsenförmigen Schlagelementträger 22 als Aufhängung oberhalb der Draht-Förderspindel 7 verbunden. Der Schlagelementträger 22 ist an der Rückwand 6' befestigt, könnte aber in einer anderen Ausführungsform auch an dem nicht bezeichneten Deckel oberhalb des Schlagelementträgers 22 angebracht sein.

In der Situation, die in Figur 4 dargestellt ist, befinden sich die beiden Schlagelemente 18 und 19 in einer Ausgangsposition, in der sie an je einer Flanke der Draht-Förderspindel 7 anliegen. Bei Drehung der Draht-Förderspindel 7 mittels des Elektromotors 13 gleiten sie an der Windung der Draht-Förderspindel 7 entlang, bis sie in die in Figur 5 dargestellte Rückstellposition gelangen, die für das Schlagelement 18 mit 25 bezeichnet ist. In der Rückstellposition rutschen sie bei weiterer Drehung der Draht-Förderspindel 7 unter der Wirkung der Rückstellfedern 20, 21 über die anliegende Flanke der Draht-Förderspindel 7 hinweg und schnellen unter Auflockerung des Instantpulvers in die in Figur 4 dargestellte Ausgangsposition zurück, in der sie jeweils wieder an einer Flanke der Draht-Förderspindel 7 anliegen, um erneut in Förderrichtung mitgenommen zu werden. Wenn die Schlagelemente 19, 20 während des Zurückschnellens auf Widerstand stoßen, sei es auf geklumptes Instantpulver oder die nachfolgende Flanke der Draht-Förderspindel, wirken sie mit ihrem Stoß effektiv auf den Widerstand ein. Demzufolge wird das Instantpulver entweder direkt oder mittelbar über die Draht-Förderspindel 7 vor der Rückförderstrecke wirksam gelockert und mittels der Draht-Förderspindel 7 störungsfrei zu der Auslauföffnung 4 transportiert, wobei sich das Instantpulver an der Stirnwand 6 in dem Instantpulverbehälter 2 nicht übermäßig anhäuft.

### Bezugszahlen

- 1, 1': Instantpulverfördervorrichtung
- 2: Instantpulverbehälter
- 3: Auslaufzylinder
- 4: Auslauföffnung
- 5: Auslaufschnaupe
- 6: Stirnwand
- 6': Rückwand
- 7: Draht-Förderspindel
- 7': Förderrichtung
- 8: Förderspindelantriebszapfen
- 9: Förderspindelachslager
- 10: vorderer Förderspindellagerzapfen
- 11: vorderer Förderspindelzapfenlager
- 12: Förderspindelzapfenlageranbindung
- 13: Motor
- 14: Getriebe
- 15: Rückförderschneckenwelle
- 16: Rückförderschnecke
- 16': Rückförderstrecke
- 17: vorderes Rückförderschneckenwellenlager
- 18: Schlagelement
- 19: Schlagelement
- 20: Rückstellfeder
- 21: Rückstellfeder
- 22: hülsenförmigen Schlagelementträger (Aufhängung)
- 23: Rückstellfederanbindung
- 24: Rückstellfederanbindung
- 25: Schlagelement-Rückstellposition

## Patentansprüche

1. Instantpulverfördervorrichtung (1, 1') eines Getränkezubereitungsgeräts, mit einer in einem Bodenbereich des Instantpulverbehälters (2) im wesentlichen horizontal angeordneten drehbaren Draht-Förderspindel (7) oder Förderschnecke, an deren Ende sich eine Auslauföffnung (4) befindet,
wobei in dem Instantpulverbehälter (2) oberhalb der Draht-Förderspindel (7) oder Förderschnecke mindestens eine zu dieser gegenläufige Rückförderschnecke (16) angeordnet ist, deren Rückförderstrecke (16') nahe dem Ende der Draht-Förderspindel (7) oder Förderschnecke beginnt und kürzer als die Förderstrecke der Draht-Förderspindel (7) oder Förderschnecke ist-,
**dadurch gekennzeichnet,**
**dass** mindestens zwei Rückförderschnecken auf einer Rückförderschneckenwelle austauschbar in axialem Abstand zueinander aufgeschoben sind.

2. Instantpulverfördervorrichtung nach Anspruch 1,
**dadurch gekennzeichnet,**
**dass** die mindestens eine Rückförderschnecke (16) mit geringerer Förderleistung als die Förderleistung der Draht-Förderspindel (7) oder Förderschnecke bemessen ist.

3. Instantpulverfördervorrichtung nach Anspruch 1 oder 2,
**dadurch gekennzeichnet,**
**dass** die mindestens eine Rückförderschnecke (16) und die Draht-Förderspindel (7) oder Förderschnecke getriebetechnisch mit einem gemeinsamen Motor (13) verbunden sind.

4. Instantpulverfördervorrichtung nach einem der vorangehenden Ansprüche,
**dadurch gekennzeichnet,**
**dass** in dem Instantpulverbehälter (2) mindestens ein Schlagelement (18, 19), das in axialer Richtung der Draht-Förderspindel (7) oder Förderschnecke elastisch verstellbar und in die Draht-Förderspindel (7) oder Förderschnecke im wesentlichen quer zu dieser hineinreichend angeordnet ist, gegenüber der Rückförderstrecke (16') der mindestens einen Rückförderschnecke (16) axial versetzt angeordnet ist.

5. Instantpulverfördervorrichtung nach Anspruch 4,
**dadurch gekennzeichnet,**
**dass** das Schlagelement (18, 19) außerhalb der Draht-Förderspindel (7) oder Förderschnecke bevorzugt oberhalb an einem ortsfesten Schlagelementträger (22) angebracht ist und dass eine Rückstellfeder (20, 21) einerseits mit dem Schlagelementträger (22) und andererseits mit dem Schlagelement (18, 19) verbunden ist.

6. Instantpulverfördervorrichtung nach Anspruch 5,
**dadurch gekennzeichnet,**
**dass** der Schfagelementträger (22) hülsenförmig ist und einen Abschnitt der Rückförderschneckenwelle (15) aufnimmt.

7. Instantpulverfördervorrichtung nach Anspruch 5 oder 6,
**dadurch gekennzeichnet,**
**dass** das Schlagelement (18, 19) über eine Blattfeder (20, 21) als Rückstellfeder mit dem Schlagelementträger (22) verbunden ist.

8. Instantpulverfördervorrichtung nach einem der Ansprüche 5 - 7,
**dadurch gekennzeichnet,**
**dass** das Schlagelement (18, 19) eine im wesentlichen quer zu der axialen Richtung der Draht-Förderspindel (7) oder Förderschnecke angeordnete Schlagfläche aufweist.

9. Instantpulverfördervorrichtung nach einem der Ansprüche 5 - 8,
**dadurch gekennzeichnet,**
**dass** die Schlagfläche um den Steigungswinkel der Draht-Förderspindel (7) oder Förderschnecke gegen deren Normal-Querschnittsfläche geneigt angeordnet ist.

10. Instantpulverfördervorrichtung nach einem der Ansprüche 5 - 9,
**dadurch gekennzeichnet,**
**dass** die Schlagfläche an den Querschnitt des Bodenbereichs des Instantpulverbehälters (2) angepasst ist.

11. Instantpulverfördervorrichtung nach einem der Ansprüche 4 - 10,
**dadurch gekennzeichnet,**
**dass** mehrere Schlagelemente (18, 19) in axialer Richtung der Draht-Förderspindel (7) oder Förderschnecke versetzt angeordnet sind.

## Claims

1. Instant powder conveying device (1, 1') for a drink preparation device including a rotary wire feed conveyor (7), or a worm conveyor, disposed substantially horizontally in a bottom area of the instant powder container (2), at the end of which wire feed conveyor an outflow opening is provided,
wherein in the instant powder container (2) above the wire feed conveyor (7), or worm conveyor, at least one return worm conveyor (16) oppositely oriented thereto is disposed, the return conveying path (16') of which starts near the end of the wire feed conveyor (7), or worm conveyor, and is shorter than the conveying path of the wire feed conveyor (7), or worm conveyor,
**characterized in**
**that** at least two return worm conveyors are exchangeably provided at an axial distance relative to each other on one return worm conveyor shaft.

2. Instant powder conveying device according to claim 1,
**characterized in**
**that** the at least one return worm conveyor (16) is designed to have a conveying capacity smaller than the conveying capacity of the wire feed conveyor (7), or worm conveyor.

3. Instant powder conveying device according to claim 1 or 2,
**characterized in**
**that** the at least one return worm conveyor (16) and the wire feed conveyor (7), or worm conveyor, are gear wisely connected with one another by one common motor (13).

4. Instant powder conveying device according to one of the foregoing claims,
**characterized in**
**that** in the instant powder container (2) at least one impacting element (18, 19) elastically adjustably disposed in axial direction of the wire feed conveyor (7), or worm conveyor, and extending substantially at right angles relative thereto into the wire feed conveyor (7), or worm conveyor, is provided axially displaced relative to the return conveyor path (16') of the at least one return worm conveyor (16).

5. Instant powder conveying device according to claim 4,
**characterized in**
**that** the impacting element (18, 19) is disposed outside of the wire feed conveyor (7), or worm conveyor, preferably above a fixed impacting element carrier (22) and that a return spring (20, 21) is connected with the impacting element carrier (22), on one hand, and with the impacting element (18, 19) on the other.

6. Instant powder conveying device according to claim 5,
**characterized in**
**that** the impacting element carrier (22) is tube shaped and incorporates one section of the return worm conveyor shaft (15).

7. Instant powder conveying device according to claim 5 or 6,
**characterized in**
**that** the impacting element (18, 19) is connected via a flat spring (20, 21) as return spring with the impacting element carrier (22).

8. Instant powder conveying device according to one of claims 5 through 7,
**characterized in**
**that** the impacting element (18, 19) includes an impacting face disposed substantially at right angles relative to the axial direction of the wire feed conveyor (7), or worm conveyor.

9. Instant powder conveying device according to one of claims 5 through 8,
**characterized in**
**that** the impacting face is disposed inclined by the pitch angle of the wire feed conveyor (7), or worm conveyor, against the normal cross sectional area thereof.

10. Instant powder conveying device according to one of claims 5 through 9,
**characterized in**
**that** the impacting face is adapted to the cross section of the bottom area of the instant powder container (2).

11. Instant powder conveyor device according to one of claims 4 through 10,
**characterized in**
**that** a plurality of impacting elements (18, 19) are staggered in axial direction of the wire feed conveyor (7), or worm conveyor.

## Revendications

1. Dispositif de transport de poudre instantanée (1,1') pour un appareil de préparation de boissons, comprenant une tige transporteuse en fil (7), ou vis transporteuse rotative, disposée sensiblement horizontalement dans une région de fond du réservoir de poudre instantanée (2) et à l'extrémité de laquelle se trouve une ouverture de sortie (4),
dans lequel il est prévu, dans le réservoir de poudre instantanée (2), au-dessus de la tige transporteuse en fil (7) ou vis transporteuse, au moins une vis de renvoi (16) qui tourne dans le sens opposé et dont la course de renvoi (16') commence près de l'extrémité de la tige transporteuse en fil (7), ou vis transporteuse, et est plus courte que la course de transport de la tige transporteuse en fil (7), ou vis transporteuse,
**caractérisé en ce qu'**au moins deux vis de renvoi sont emmanchées sur un arbre de vis de renvoi de façon interchangeable et à une certaine distance axiale l'une de l'autre.

2. Dispositif de transport de poudre instantanée selon la revendication 1,
**caractérisé en ce que**
ladite vis de renvoi (16), au moins au nombre de une, est dimensionnée pour une capacité de transport inférieure à la capacité de transport de la tige transporteuse en fil (7), ou vis transporteuse.

3. Dispositif de transport de poudre instantanée selon la revendication 1 ou 2,
**caractérisé en ce que**
ladite vis de renvoi (16), au moins au nombre de une, et la tige transporteuse en fil (7), ou vis transporteuse, sont reliées cinématiquement à un moteur commun (13).

4. Dispositif de transport de poudre instantanée selon l'une des revendications précédentes,
**caractérisé en ce que**,
dans le réservoir de poudre instantanée (2), est prévu au moins un élément percuteur (18, 19) qui peut se mouvoir élastiquement dans la direction axiale de la tige transporteuse en fil (7), ou vis transporteuse, et qui est engagé sensiblement transversalement dans la tige transporteuse en fil (7), ou vis transporteuse, sur une distance suffisante, et qui est décalé axialement par rapport à la course de renvoi (16') de ladite vis de renvoi (16), au moins au nombre de une.

5. Dispositif de transport de poudre instantanée selon la revendication 4,
**caractérisé en ce que**
l'élément percuteur (18, 19) est fixé, en dehors de la tige transporteuse en fil (7), ou vis transporteuse, de préférence au-dessus, à un support d'élément percuteur (22) fixe en position, et **en ce qu'**un ressort de rappel (20, 21) est relié, d'une part, au support d'élément percuteur (22) et, d'autre part, à l'élément percuteur (18, 19).

6. Dispositif de transport de poudre instantanée selon la revendication 5,
**caractérisé en ce que**
le support d'élément percuteur (22) est en forme de douille et reçoit un segment de l'arbre de la vis de renvoi (15).

7. Dispositif de transport de poudre instantanée selon la revendication 5 ou 6,
**caractérisé en ce que**
l'élément percuteur (18, 19) est relié au support d'élément percuteur (22) par l'intermédiaire d'un ressort lame (20, 21) constituant un ressort de rappel.

8. Dispositif de transport de poudre instantanée selon l'une des revendications 5 à 7,
**caractérisé en ce que**
l'élément percuteur (18, 19) présente une surface de percussion disposée sensiblement transversalement à la direction axiale de la tige transporteuse en fil (7), ou vis transporteuse.

9. Dispositif de transport de poudre instantanée selon l'une des revendications 5 à 8,
**caractérisé en ce que**
la surface de percussion est inclinée par rapport à la surface de la section normale de la tige transporteuse en fil (7), ou vis transporteuse, selon l'angle de pas de cette dernière.

10. Dispositif de transport de poudre instantanée selon l'une des revendications 5 à 9,
**caractérisé en ce que**
la surface de percussion est adaptée à la section transversale de la région de fond du réservoir de poudre instantanée (2).

11. Dispositif de transport de poudre instantanée selon l'une des revendications 4 à 10,
**caractérisé en ce que**
plusieurs éléments percuteurs (18,19 sont disposés de façon décalée dans la direction axiale de la tige transporteuse en fil (7), ou vis transporteuse.
